# EUROPÄISCHE PATENTSCHRIFT

(11) **EP 2 176 920 B1**
(45) Veröffentlichungstag und Bekanntmachung des Hinweises auf die Patenterteilung: **12.12.2012**
(21) Anmeldenummer: 08774623.6
(22) Anmeldetag: 02.07.2008
(51) Int. Cl.: H01M 10/50

(54) **VERFAHREN ZUM BETREIBEN EINER ANTRIEBSVORRICHTUNG SOWIE ANTRIEBSVORRICHTUNG**
METHOD FOR OPERATING A DRIVE APPARATUS, AND A DRIVE APPARATUS
PROCÉDÉ POUR FAIRE FONCTIONNER UN DISPOSITIF D'ENTRAÎNEMENT AINSI QUE DISPOSITIF D'ENTRAÎNEMENT

(30) Priorität: 08.08.2007 DE 102007037352
(43) Veröffentlichungstag der Anmeldung: 21.04.2010
(73) Patentinhaber: Robert Bosch GmbH, 70442 Stuttgart (DE)
(72) Erfinder: FASSNACHT, Jochen, 78713 Schramberg (DE); KERN, Rainer, 70174 Stuttgart (DE)
(86) Internationale Anmeldenummer: PCT/EP2008/058484
(87) Internationale Veröffentlichungsnummer: WO 2009/019085

(56) Entgegenhaltungen:
- EP-A- 1 699 106
- DE-A1- 3 528 673
- US-A- 5 730 237
- US-A- 6 072 301
- US-A- 6 078 163

## Beschreibung

Die Erfindung betrifft ein Verfahren zum Betreiben einer Antriebsvorrichtung eines Fahrzeugs, insbesondere Kraftfahrzeugs, die eine Brennkraftmaschine, mindestens eine elektrische Maschine und mindestens einen elektrischen Speicher, insbesondere einen Lithium-Ionen-Akkumulator, aufweist, wobei zum Starten der Brennkraftmaschine mittels der elektrischen Maschine Energie aus dem elektrischen Speicher entnommen wird.

Ferner betrifft die Erfindung eine Antriebsvorrichtung für ein Fahrzeug, insbesondere Kraftfahrzeug, insbesondere zur Durchführung des oben genannten Verfahrens, die eine Brennkraftmaschine, mindestens eine elektrische Maschine und zumindest einen elektrischen Speicher aufweist.

### Stand der Technik

Aus dem Stand der Technik sind Verfahren sowie Vorrichtungen der eingangs genannten Art bekannt. Bei Antriebsvorrichtungen eines Fahrzeugs, die eine Brennkraftmaschine und eine elektrische Maschine aufweisen - so genannte Hybrid-Antriebsvorrichtungen - ist es bekannt, die Brennkraftmaschine mittels der elektrischen Maschine zu starten, wobei die notwendige Energie für die in diesem Fall motorisch betriebene elektrische Maschine einem elektrischen Speicher der Antriebsvorrichtung entnommen wird. Da das Betreiben eines derartigen elektrischen Speichers bei niedrigen Temperaturen, insbesondere bei Temperaturen von unter 0°C, zu einer schnellen Alterung des elektrischen Speichers führen kann, ist, wie zum Beispiel in der JP 2003-341448 A offenbart, vorgesehen, den elektrischen Speicher zu beheizen, sodass dieser schnell eine gewünschte Betriebstemperatur beziehungsweise Mindesttemperatur erreicht.

Aus der Offenlegungsschrift DE 35 28 673 A1 sind ein Verfahren und eine Vorrichtung zum Starten einer Brennkraftmaschine bekannt, wobei ein elektrischer Energiespeicher vorgesehen ist, der ein Heizgerät aufweist. Weiterhin ist eine Brennstoffzelle vorgesehen, die wahlweise mit dem Energiespeicher oder dem Heizgerät verbindbar ist. Um eine ausreichende elektrische Leistung zum Starten der Brennkraftmaschine zur Verfügung zu stellen, wird der Energiespeicher beheizt.

Aus der Druckschrift US 5,730,237 ist ein Heizgerät für elektrisch betriebene Fahrzeuge bekannt, bei welchem das Abgas eines Verbrennungsheizgeräts Batterien des Kraftfahrzeugs zugeführt wird.

Außerdem wird in der Druckschrift US 6,072,301 ein Schaltkreis zum Erwärmen eines Energiespeichers offenbart, bei welchem ein Speicherschaltkreis mit einer Resonanzfrequenz vorgesehen ist.

### Offenbarung der Erfindung

Erfindungsgemäß ist vorgesehen, dass nach dem Start der Brennkraftmaschine und bis zum Erreichen einer vorbestimmten Mindesttemperatur des beheizten elektrischen Speichers der elektrische Speicher lastfrei oder nahezu lastfrei betrieben wird. Nachdem also Energie dem elektrischen Speicher zum Starten der Brennkraftmaschine entnommen wurde, wird der elektrische Speicher vorteilhafterweise solange lastfrei betrieben, bis er die vorbestimmte Mindesttemperatur erreicht hat. Damit der elektrische Speicher die Mindesttemperatur schnell erreichen kann, wird er beheizt, wobei das Beheizen des elektrischen Speichers während und/oder nach dem Start der Brennkraftmaschine bis zum Erreichen der vorbestimmten Mindesttemperatur des elektrischen Speichers erfolgt. Durch das lastfreie Betreiben des elektrischen Speichers, unter dem auch ein nahezu lastfreies Betreiben zu verstehen ist, also durch ein Betreiben des elektrischen Speichers ohne oder ohne größere Ladungs- und/oder Entladungsvorgänge, wird der elektrische Speicher bis zum Erreichen der Mindesttemperatur nicht beansprucht, sodass eine schnelle Alterung des Speichers, insbesondere des Lithium-Ionen-Akkumulators, verhindert wird. Nach Erreichen der Mindesttemperatur wird der elektrische Speicher wieder "normal" betrieben, wobei die dann erzeugte Energie der generatorisch betriebenen elektrischen Maschine zunächst dem elektrischen Speicher zugeführt wird, sodass er die ihm zum Starten entnommene Energie zurückerhält. Zweckmäßigerweise wird der elektrische Speicher bei niedrigen Temperaturen mit einem hohen SOC (state of charge = Ladungszustand) betrieben. Schließlich ist vorgesehen, dass der elektrische Speicher solange beheizt wird, bis er eine Mindesttemperatur von 0°C erreicht hat. Ein Belasten beziehungsweise Beanspruchen des elektrischen Speichers oberhalb von 0°C wirkt sich auf die Alterung des elektrischen Speichers nicht wesentlich aus.

Nach einer Weiterbildung der Erfindung wird zum Beheizen dem elektrischen Speicher Wärmeenergie aus einem Abgas der Brennkraftmaschine zugeführt. Hierbei wird also die Wärmeenergie des Abgases genutzt, um den elektrischen Speicher aufzuheizen beziehungsweise zu erwärmen. Vorteilhafterweise wird dazu der elektrische Speicher in der Nähe des Abgangsstrangs der Brennkraftmaschine im Fahrzeug verbaut.

Nach einer Weiterbildung der Erfindung wird dem elektrischen Speicher ein erhitztes flüssiges und/oder gasförmiges Medium zugeführt, durch dessen Wärmeenergie der elektrische Speicher beheizt wird. Das flüssige und/oder gasförmige Medium dient hierbei als Träger für die Wärmeenergie des Abgases beziehungsweise für die dem Abgas entzogene Wärmeenergie.

Weiterhin ist vorgesehen, dass das Medium durch den elektrischen Speicher hindurch und/oder an ihm entlang geführt wird. Bevorzugt weist der elektrische Speicher dazu mindestens einen Strömungskanal auf, der an dem Speicher, beziehungsweise an einem Gehäuse des Speichers entlang und/oder durch den Speicher hindurchführt.

Nach einer Weiterbildung der Erfindung wird als Medium ein Luftstrom, insbesondere ein Frischluftstrom verwendet, der mittels mindestens eines Wärmetauschers mit dem Abgas entzogener Wärmeenergie beaufschlagt wird. Es ist also vorgesehen, dem elektrischen Speicher einen Luftstrom zuzuführen, der mit dem Abgas entzogener Wärmeenergie beaufschlagt ist, wobei dem Abgas die Wärmeenergie vorzugsweise mittels eines Wärmetauschers entzogen und der Luftstrom damit beaufschlagt wird. Der Wärmetauscher wird dazu zweckmäßigerweise direkt an dem Abgastrakt, beziehungsweise an einem das Abgas führenden Rohr des Abgastrakts, angeordnet, besonders bevorzugt stromabwärts eines Katalysators des Abgastrakts.

Alternativ ist vorgesehen, dass als Medium das Abgas der Brennkraftmaschine selbst verwendet wird. Hierbei wird das Abgas oder ein Teil davon direkt dem elektrischen Speicher zugeführt, sodass die im Abgas enthaltene Wärmeenergie direkt auf den elektrischen Speicher übertragen wird.

Besonders bevorzugt ist vorgesehen, dass das Medium, wie zum Beispiel der Luftstrom oder das Abgas, in Abhängigkeit von einer aktuellen Speichertemperatur des elektrischen Speichers durch den Wärmetauscher und/oder den elektrischen Speicher hindurch und/oder daran vorbeigeleitet wird. Hierdurch kann beispielsweise die Geschwindigkeit, in der der elektrische Speicher aufgeheizt wird, eingestellt werden und nach Erreichen der Mindesttemperatur kann der Beheizvorgang beendet werden, indem das Medium an dem Wärmetauscher und/oder an dem elektrischen Speicher vorbeigeleitet wird. Dies kann beispielsweise mittels eines Bypasses bewirkt werden. Alternativ und/oder zusätzlich ist vorgesehen, dass zum Beheizen des elektrischen Speichers hochfrequente Stromsignale in dem elektrischen Speicher erzeugt werden. Die hochfrequenten Stromsignale berühren aufgrund der großen Zeitkonstanten des chemischen Systems des elektrischen Speichers dieses nicht, sodass keine Ladungs - und/oder Entladungsvorgänge erfolgen. Allerdings entstehen durch den Stromfluss Verluste in den Zuleitungen und den Elektroden, die den elektrischen Speicher erwärmen. Bevorzugt wird zum Beheizen zumindest eine Kapazität des elektrischen Speichers mittels der hochfrequenten Stromsignale umgeladen. Bevorzugt werden die Stromsignale mit einer Frequenz über 200 Hz erzeugt. Dabei können zur Erzeugung der hochfrequenten Stromsignale jegliche Bauteile eines (Traktions-) Bordnetzes der Antriebsvorrichtung verwendet werden, sofern diese über einen eigenen Energiespeicher verfügen. Die nötige Energie wird dem Verbrennungsmotor über die elektrische Maschine entnommen.

Da an den Umladevorgängen auch die Widerstände einer Verbindungstechnik des elektrischen Speichers und natürlich seine Elektrodenwiderstände beteiligt sind, können derartige hochfrequente Stromsignale zum schonenden Heizen des elektrischen Speichers verwendet werden. Wobei die Leistung des elektrischen Speichers beziehungsweise seine Ladekapazität nicht beansprucht und dieser somit lastfrei betrieben wird.

Weiterhin ist vorgesehen, dass zur Erzeugung der hochfrequenten Stromsignale mindestens ein DC/DC-Wandler oder Inverter verwendet wird. Dieser ist häufig bei Hybrid-Antriebsvorrichtungen vorzufinden und kann daher einfach für den erfindungsgemäßen Zweck verwendet werden. Die Energie schwingt dann zwischen dem elektrischen Speicher und einer Zwiscnenkreiskapazität beim DC/DC-Wandler oder zwischen dem elektrischen Speicher und der elektrischen Maschine bei der Benutzung des Wechselrichters. Die Verluste werden durch die generatorisch arbeitende elektrische Maschine gedeckt.

Nach einer vorteilhaften Weiterbildung der Erfindung werden die hochfrequenten Stromsignale durch eine hochdynamische Regelung der elektrischen Maschine erzeugt.

Ferner wird zum Einstellen der Lastfreiheit des elektrischen Speichers eine Speicherstromregelung mit einem Stromsollwert gleich Null oder mit einem hochfrequenten Stromsollwert zum Beheizen verwendet. Alternativ oder zusätzlich wird zum Einstellen der Lastfreiheit des elektrischen Speichers eine Speicherleistungsregelung mit einem Leistungssonwert gleich Null oder mit einem hochfrequenten Leistungssolwert zum Beheizen verwendet. Schließlich ist vorgesehen, dass Kabineninnenraumluft oder eine Kabinenheizung (Motorabwärme) zum Beheizen verwendet wird.

Die erfindungsgemäße Antriebsvorrichtung mit den Merkmalen des Anspruchs 15 weist Mittel zum Beheizen des elektrischen Speichers auf. Zudem ist eine Speicherstromregelung mit einem Stromsollwert gleich Null zur Einstellung der Lastfreiheit des elektrischen Speichers vorgesehen, wobei der elektrische Speicher nach dem Start der Brennkraftmaschine bis zum Erreichen einer Mindesttemperatur lastfrei oder nahezu lastfrei betrieben wird.

Vorteilhafterweise umfassen die Mittel mindestens einen ein erhitztes flüssiges und/oder gasförmiges Medium dem elektrischen Speicher zuführenden Strömungskanal. Zweckmäßigerweise führt der Strömungskanal zumindest bereichsweise durch den elektrischen Speicher hindurch und/oder an diesem entlang. Bevorzugt weist der elektrische Speicher dazu ein Gehäuse auf, das zumindest einen Bereich des Strömungskanals bildet beziehungsweise aufweist.

In einer Weiterbildung der Erfindung ist das Medium ein Luftstrom, insbesondere Frischluftstrom, wobei die Mittel weiterhin einen Wärmetauscher umfassen, der den Luftstrom mit dem Abgas entzogener Wärmeenergie beaufschlagt. Der Wärmetauscher ist dazu bevorzugt einem Abgastrakt der Brennkraftmaschine zugeordnet. Zweckmäßigerweise führt der Strömungskanal durch den Wärmetauscher der strömungstechnisch vor dem elektrischen Speicher angeordnet ist.

Weiterhin ist ein Bypass für das Medium vorgesehen, der in Abhängigkeit der aktuellen Speichertemperatur einstellbar ist. Der Bypass ist bevorzugt dem Wärmetauscher und/oder dem elektrischen Speicher zugeordnet. Hierdurch kann beispielsweise die Geschwindigkeit der Temperaturzunahme des elektrischen Speichers beeinflusst werden. Auch kann hierdurch auf einfache Art und Weise nach Erreichen der vorbestimmten Mindesttemperatur des elektrischen Speichers der Beheiz-Vorgang beendet werden, wobei das Medium an dem elektrischen Speicher und/oder an dem Wärmetauscher vorbeigeführt wird. In einer alternativen Weiterbildung der Antriebsvorrichtung ist der Strömungskanal vorteilhafterweise als Abgasströmungskanal ausgebildet, sodass Abgas der Brennkraftmaschine,

In einer alternativen Weiterbildung der Erfindung ist der Strömungskanal vorteilhafterweise als Abgasströmungskanal ausgebildet, sodass Abgas der Brennkraftmaschine, welches durch die Verbrennung in der Brennkraftmaschine erhitzt wurde, direkt dem elektrischen Speicher zugeführt wird.

Weiterhin ist vorgesehen, dass die Mittel der Antriebsvorrichtung zumindest eine Einrichtung zum Erzeugen hochfrequenter Stromsignale in dem elektrischen Speicher umfassen. Durch hochfrequente Stromsignale entstehen Ohmsche Verluste in dem elektrischen Speicher, die zu einem "schonenden" Beheizen des elektrischen Speichers, wie oben beschrieben, dienen. Vorteilhafterweise ist die Einrichtung als DC/DC-Wandler ausgebildet.

Schließlich ist vorgesehen, dass zum Beheizen elektrische Heizelemente in dem elektrischen Speicher oder in der Nähe des elektrischen Speichers angeordnet sind.

### Kurze Beschreibung der Zeichnungen

Im Folgenden soll die Erfindung anhand einiger Figuren näher erläutert werden. Dazu zeigen:
- Figur 1: ein Ausführungsbeispiel eines vorteilhaften Verfahrens zum Betreiben einer Antriebsvorrichtung;
- Figur 2: ein erstes Ausführungsbeispiel einer vorteilhaften Antriebsvorrichtung und
- Figur 3: ein Ersatzschaltbild eines elektrischen Speichers.

### Ausführungsform(en) der Erfindung

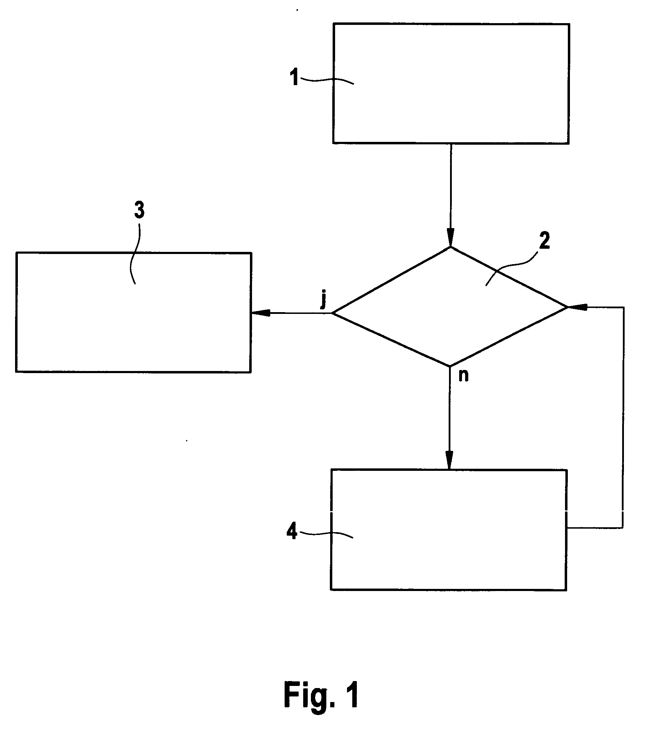

Die Figur 1 zeigt in einem Flussdiagramm ein Ausführungsbeispiel für ein vorteilhaftes Verfahren zum Betreiben einer Antriebsvorrichtung eines Fahrzeugs, die eine Brennkraftmaschine, mindestens eine elektrische Maschine und mindestens einen beheizbaren elektrischen Speicher aufweist. In einem ersten Schritt 1 wird die Brennkraftmaschine mittels der elektrischen Maschine, die mit der Brennkraftmaschine zweckmäßigerweise wirkverbunden beziehungsweise wirkverbindbar ist, gestartet. Dabei wird dem elektrischen Speicher Energie zum Betreiben der elektrischen Maschine entnommen. Beim Start der Brennkraftmaschine wird in einer Abfrage 2 die aktuelle Temperatur des elektrischen Speichers ermittelt. Ergibt die Abfrage 2, dass die aktuelle Temperatur des elektrischen Speichers einer vorbestimmten Mindesttemperatur von zum Beispiel 0°C entspricht (j = ja) oder diese übertrifft, so wird in einem folgenden Schritt 3 die Antriebsvorrichtung, die tatsächlich als Hybrid-Antriebsvorrichtung ausgebildet ist, "normal" betrieben. Das bedeutet, dass zum Beispiel Rekuperationsbetrieb, Boostbetrieb und elektrisches Fahren möglich sind. Ergibt die Abfrage 2, dass die Temperatur unterhalb der vorbestimmten Mindesttemperatur des elektrischen Speichers liegt (n = nein), so wird in einem folgenden Schritt 4 bestimmt, dass der elektrische Speicher lastfrei, also derart betrieben wird, dass keine Entladungs- und/oder Beladungsvorgänge erfolgen. Gleichzeitig wird der elektrische Speicher beheizt, bis die Abfrage 2 ergibt, dass die aktuelle Temperatur des Speichers der vorbestimmten Mindesttemperatur genügt. Sobald dies erfolgt ist, wird die Antriebsvorrichtung wieder "normal" (Schritt 3) betrieben und das Beheizen des elektrischen Speichers eingestellt.

Durch das lastfreie Betreiben des hier als Lithium-Ionen-Akkumulator ausgebildeten elektrischen Speichers unterhalb der vorbestimmten Mindesttemperatur von zum Beispiel 0°C, wird eine schnelle Alterung des Speichers vermieden beziehungsweise verhindert. Insbesondere beim Laden des Lithium-Ionen-Akkumulators, führt dies zu einer schnellen Alterung. Durch das lastfreie Betreiben und das Beheizen des elektrischen Speichers wird zum einen verhindert, dass der elektrische Speicher schnell altert, und zum anderen erreicht, dass der elektrische Speicher in kurzer Zeit nach dem Start der Brennkraftmaschine wieder "normal" betrieben werden kann. Die notwendige elektrische Energie kann in der Phase des lastfreien Betriebs durch die generatorisch arbeitende elektrische Maschine erzeugt werden. Der lastfreie Betrieb des Energiespeichers kann bei generatorisch arbeitender elektrischer Maschine (insbesondere zur Versorgung eines Bordnetzes des Fahrzeugs) durch eine Speicherladestromregelung mit Sollwert 0 erreicht werden. Dieser Regelung kann, falls über die Verlustwiderstände geheizt werden soll, ein Wechselstromsollwert ohne Gleichanteil aufgeprägt werden.

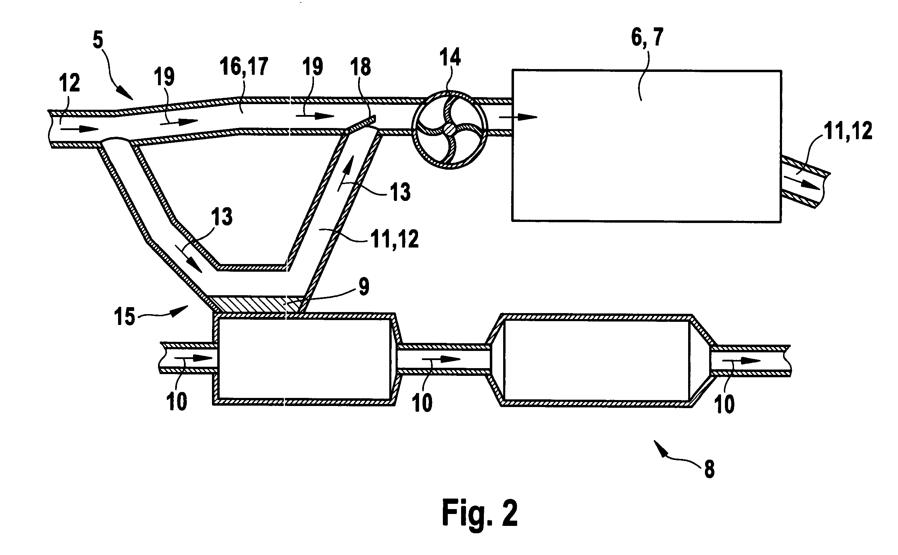

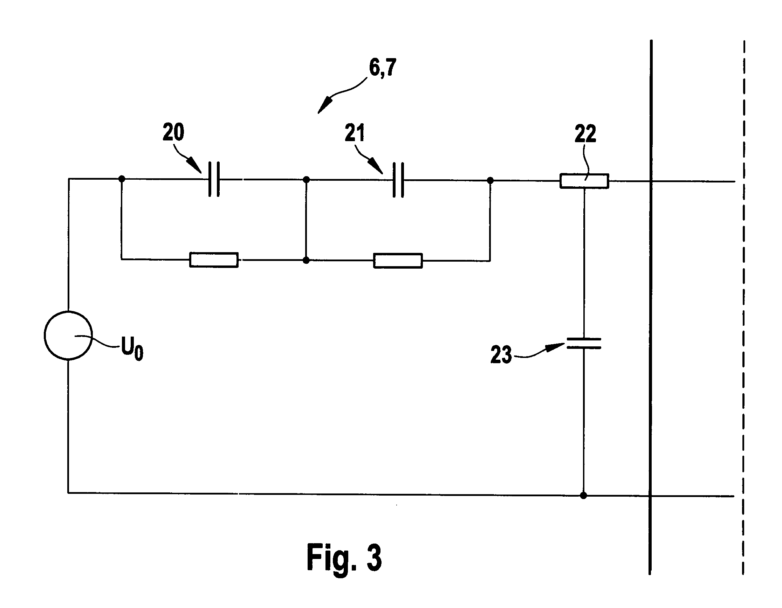

Die Figuren 2 und 3 zeigen Ausführungsbeispiele für vorteilhafte Antriebsvorrichtungen, die ein Beheizen des elektrischen Speichers ermöglichen.

Die Figur 2 zeigt einen Teil der oben beschriebenen Antriebsvorrichtung 5. Dargestellt ist ein elektrischer Speicher 6, der als Lithium-Ionen-Akkumulator 7 ausgebildet ist. Der elektrische Speicher 6 ist elektrisch mit der hier nicht dargestellten elektrischen Maschine verbunden, sodass diese Energie aus dem elektrischen Speicher 6 nehmen oder diesem zuführen kann. In dem vorliegenden Ausführungsbeispiel ist der Speicher 6 vorteilhafterweise in der Nähe eines Abgastraktes 8 der Brennkraftmaschine, die hier ebenfalls nicht dargestellt ist, angeordnet. Dem Abgastrakt 8 ist ein Wärmetauscher 9 zugeordnet, der an dem Abgastrakt strömungstechnisch hinter einem Katalysator angeordnet ist und dem in Richtung der Pfeile 10 strömenden Abgas Wärmeenergie entnimmt/entzieht. Durch den Wärmetauscher 9 führt ein Zweig 11 eines Strömungskanals 12, wobei die dem Abgas entzogene Wärmeenergie einem durch den Strömungskanal 12 in Richtung der Pfeile 13 strömenden gasförmigen und/oder flüssigen Medium zugeführt wird. Natürlich sind auch entgegengesetzte Strömungsrichtungen von Abgas und Medium denkbar. Der Zweig 11 des Strömungskanals 12 führt zu einer vorteilhaften Förderpumpe 14, die das gasförmige und/oder flüssige Medium durch den Strömungskanal 12, zu dem elektrischen Speicher 6 und durch diesen beziehungsweise durch ein Gehäuse des elektrischen Speichers 6 hindurch fördert. Vorteilhafterweise wird als Medium Frischluft durch den Wärmetauscher 9 geführt und dort mit aus dem Abgas entnommener Wärmeenergie beaufschlagt. Das so erhitzte Medium strömt anschließend durch den Speicher 6 beziehungsweise dessen Gehäuse und gibt dabei Wärmeenergie an den elektrischen Speicher 6 ab, sodass dieser schnell seine vorbestimmte Mindesttemperatur von 0°C erreicht. Der Strömungskanal 12 sowie der Wärmetauscher 9 bilden hierbei also Mittel 15, die zum Beheizen des elektrischen Speichers 6 dienen. Um den Heizvorgang zu beenden oder um die Aufheizgeschwindigkeit zu verändern beziehungsweise einzustellen, ist ein Bypass 16 vorgesehen, der von einem zweiten Zweig 17 des Strömungskanals 12 gebildet wird. Mittels einer Klappe 18 kann der Volumenstrom des Mediums durch den Zweig 11 entlang der Pfeile 13 und der Volumenstrom durch den zweiten Zweig 17 des Strömungskanals 12 beziehungsweise durch den Bypass 16 entlang der Pfeile 19 eingestellt werden. Die Klappe 18 kann beispielsweise derart eingestellt werden, dass der Zweig 11 verschlossen und lediglich Frischluft dem elektrischen Speicher 6 zugeführt wird. Auch kann die Klappe den jeweiligen Zweig 11, 17 nur teilweise verschließen beziehungsweise freigeben. Alternativ ist es auch denkbar, dass das erhitzte Abgas selbst oder ein Teil davon durch den elektrischen Speicher 6 beziehungsweise sein Gehäuse oder an diesem entlang geführt wird.

Die Figur 3 zeigt eine alternative oder zusätzliche Möglichkeit zum Beheizen des elektrischen Speichers 6. In der Figur 3 ist ein Ersatzschaltbild eines elektrischen Speichers dargestellt. Gezeigt sind eine ideale Spannungsquelle U₀ und zwei PT1-Glieder 20, 21. Weiterhin weist das Ersatzschaltbild einen Ohmschen Widerstand 22 sowie eine zur idealen Spannungsquelle U₀ parallel geschaltete Plattenkapazität 23 auf. Der Ohmsche Widerstand 22 ist vereinfacht dargestellt für zwei innere Widerstände, zwischen denen die Plattenkapazität 23 geschaltet ist

Das zweite PT1-Glied 21 stellt im Wesentlichen die chemische Reaktion in dem elektrischen Speicher dar, die nur langsam vonstatten geht. Wird der elektrische Speicher 6 mit einer Frequenz von 200 Hz angeregt, erfolgt ein Umladen der Plattenkapazität, ohne dass dies das chemische System berührt. Durch das Umladen der Plattenkapazität entsteht in den Ohmschen Widerständen Wärme, die den elektrischen Speicher 6 aufheizt. Durch die hochfrequenten Stromsignale, mittels denen der Speicher 6 angeregt wird, finden keine Lade- und/oder Entladevorgänge statt. Hierdurch ist es möglich, den elektrischen Speicher 6 lastfrei zu betreiben und dabei elektrisch zu beheizen, wobei die zum Anregen notwendige Energie beispielsweise durch die generatorisch arbeitende elektrische Maschine bereitgestellt werden kann. In der Zeit nach dem Start bis zu dem Erreichen der vorbestimmten Mindesttemperatur des elektrischen Speichers wird die Antriebsvorrichtung "konventionell" betrieben. Zur Erzeugung der hochfrequenten Stromsignale können unterschiedliche Bauteile des (Traktions-)Bordnetzes des Fahrzeugs verwendet werden. Diese müssen dabei über einen eigenen Energiespeicher verfügen. Falls es sich um ein System mit zusätzlichem DC/DC-Wandler zur Kopplung von einem Zwischenkreis und dem (Traktions-)Bordnetz handelt, so kann dieser eingesetzt werden. Die Energie schwingt dann zwischen dem elektrischen Speicher und der Zwischenkreiskapazität, wobei die Verluste über den Generatorbetrieb der elektrischen Maschine gedeckt werden.

Auch ist es denkbar, mittels einer hochdynamischen Regelung der elektrischen Maschine den Stromfluss schnell zu ändern und somit eine hochfrequente Anregung des elektrischen Speichers zu bewerkstelligen.

## Patentansprüche

1. Verfahren zum Betreiben einer Antriebsvorrichtung eines Fahrzeugs, insbesondere Kraftfahrzeugs, die eine Brennkraftmaschine, mindestens eine elektrische Maschine und mindestens einen beheizbaren elektrischen Speicher, insbesondere einen Lithium-Ionen-Akkumulator, aufweist, wobei zum Starten der Brennkraftmaschine mittels der elektrischen Maschine Energie aus dem elektrischen Speicher entnommen wird, **dadurch gekennzeichnet, dass** nach dem Start der Brennkraftmaschine und bis zum Erreichen einer vorbestimmten Mindesttemperatur des beheizten elektrischen Speichers der elektrische Speicher lastfrei oder nahezu lastfrei betrieben wird.

2. Verfahren nach Anspruch 1, **dadurch gekennzeichnet, dass** dem elektrischen Speicher Wärmeenergie aus einem Abgas der Brennkraftmaschine zum Beheizen zugeführt wird.

3. Verfahren nach einem der vorhergehenden Ansprüche, **dadurch gekennzeichnet, dass** dem elektrischen Speicher ein erhitztes flüssiges und/oder gasförmiges Medium zugeführt wird.

4. Verfahren nach einem der vorhergehenden Ansprüche, **dadurch gekennzeichnet, dass** das Medium durch den elektrischen Speicher hindurch und/oder an dem elektrischen Speicher entlang geführt wird.

5. Verfahren nach einem der vorhergehenden Ansprüche, **dadurch gekennzeichnet, dass** als Medium ein Luftstrom, insbesondere ein Frischluftstrom, verwendet wird, der mittels mindestens eines Wärmetauschers mit dem Abgas entzogener Wärmeenergie beaufschlagt wird.

6. Verfahren nach einem der vorhergehenden Ansprüche, **dadurch gekennzeichnet, dass** als Medium das Abgas verwendet wird.

7. Verfahren nach einem der vorhergehenden Ansprüche, **dadurch gekennzeichnet, dass** das Medium in Abhängigkeit von einer aktuellen Temperatur des elektrischen Speichers durch den Wärmetauscher und/oder den elektrischen Speicher hindurch und/oder daran vorbei geleitet wird.

8. Verfahren nach einem der vorhergehenden Ansprüche, **dadurch gekennzeichnet, dass** zum Beheizen des elektrischen Speichers hochfrequente Stromsignale in dem elektrischen Speicher erzeugt werden.

9. Verfahren nach einem der vorhergehenden Ansprüche, **dadurch gekennzeichnet, dass** mittels der hochfrequenten Stromsignale zumindest eine Plattenkapazität des elektrischen Speichers umgeladen wird.

10. Verfahren nach einem der vorhergehenden Ansprüche, **dadurch gekennzeichnet, dass** zur Erzeugung der hochfrequenten Stromsignale mindestens ein DC/DC-Wandler verwendet wird.

11. Verfahren nach einem der vorhergehenden Ansprüche, **dadurch gekennzeichnet, dass** die hochfrequenten Stromsignale durch eine hoch dynamische Regelung der elektrischen Maschine erzeugt werden.

12. Verfahren nach einem der vorhergehenden Ansprüche, **dadurch gekennzeichnet, dass** zum Einstellen der Lastfreiheit der elektrische Speicher eine Speicherstromregelung mit einem Stromsollwert gleich Null oder mit einem hochfrequenten Stromsollwert zum Beheizen verwendet wird.

13. Verfahren nach einem der vorhergehenden Ansprüche, **dadurch gekennzeichnet, dass** zum Einstellen der Lastfreiheit des elektrischen Speichers eine Speicherleistungsregelung mit einem Leistungssollwert gleich Null oder mit einem hochfrequenten Leistungssollwert zum Beheizen verwendet wird.

14. Verfahren nach einem der vorhergehenden Ansprüche, **dadurch gekennzeichnet, dass** erwärmte Kabineninnenraumluft oder eine Kabinenheizung zum Heizen verwendet wird.

15. Antriebsvorrichtung für ein Fahrzeug, insbesondere Kraftfahrzeug, insbesondere zur Durchführung des Verfahrens nach einem oder mehreren der vorhergehenden Ansprüche, die eine Brennkraftmaschine, mindestens eine elektrische Maschine und zumindest einen beheizbaren elektrischen Speicher (6) aufweist, wobei die Brennkraftmaschine mittels der elektrischen Maschine durch Entnahme von Energie aus dem elektrischen Speicher (6) startbar ist und die Antriebsvorrichtung Mittel (15) zum Beheizen des elektrischen Speichers (6) aufweist, **dadurch gekennzeichnet, dass** der elektrische Speicher (6) nach dem Start der Brennkraftmaschine bis zum Erreichen einer Mindesttemperatur des elektrischen Speichers (6) lastfrei oder nahezu lastfrei betrieben wird, wobei eine Speicherstromregelung mit einem Stromsollwert gleich Null zur Einstellung der Lastfreiheit des elektrischen Speichers (6) vorgesehen ist.

16. Antriebsvorrichtung nach Anspruch 15, **dadurch gekennzeichnet, dass** die Mittel (15) mindestens einen ein erhitztes flüssiges und/oder gasförmiges Medium dem elektrischen Speicher (6) zuführenden Strömungskanal (12) umfassen.

17. Antriebsvorrichtung nach einem der vorhergehenden Ansprüche, **dadurch gekennzeichnet, dass** der Strömungskanal (12) zumindest bereichsweise durch den elektrischen Speicher (6) hindurch und/oder an diesem entlang führt.

18. Antriebsvorrichtung nach einem der vorhergehenden Ansprüche, **dadurch gekennzeichnet**, das die Mittel (15) einen einem Abgastrakt (8) der Brennkraftmaschine zugeordneten Wärmetauscher (9) zum Erhitzen des Mediums umfassen.

19. Antriebsvorrichtung nach einem der vorhergehenden Ansprüche, **gekennzeichnet durch** einen dem Wärmetauscher (9) und/oder dem elektrischen Speicher (6) zugeordneten Bypass (16) für das Medium, der in Abhängigkeit der aktuellen Speichertemperatur einstellbar ist.

20. Antriebsvorrichtung nach einem der vorhergehenden Ansprüche, **dadurch gekennzeichnet, dass** der Strömungskanal (12) als Abgasströmungskanal ausgebildet ist.

21. Antriebsvorrichtung nach einem der vorhergehenden Ansprüche, **dadurch gekennzeichnet, dass** die Mittel zumindest eine Einrichtung, insbesondere einen DC/DC-Wandler, zum Erzeugen hochfrequenter Stromsignale in dem elektrischen Speicher (6) umfassen.

22. Antriebsvorrichtung nach einem der vorhergehenden Ansprüche, **dadurch gekennzeichnet, dass** elektrische Heizelemente in dem elektrischen Speicher (6) oder in der Nähe des elektrischen Speichers (6) zum Beheizen angeordnet sind.

## Claims

1. Method for operating a drive apparatus of a vehicle, in particular motor vehicle, which drive apparatus has an internal combustion engine, at least one electric machine and at least one heatable electric accumulator, in particular a lithium-ion battery, wherein for the starting of the internal combustion engine by means of the electric machine, energy is extracted from the electric accumulator, **characterized in that**, after the starting of the internal combustion engine and until a predetermined minimum temperature of the heated electric accumulator is reached, the electric accumulator is operated in a load-free or virtually load-free manner.

2. Method according to Claim 1, **characterized in that** heat energy from an exhaust gas of the internal combustion engine is supplied, for heating purposes, to the electric accumulator.

3. Method according to one of the preceding claims, **characterized in that** a heated liquid and/or gaseous medium is supplied to the electric accumulator.

4. Method according to one of the preceding claims, **characterized in that** the medium is conducted through the electric accumulator and/or along the outside of the electric accumulator.

5. Method according to one of the preceding claims, **characterized in that** an air flow, in particular a fresh air flow, which is charged with heat energy extracted by means of at least one heat exchanger with the exhaust gas is used as medium.

6. Method according to one of the preceding claims, **characterized in that** the exhaust gas is used as medium.

7. Method according to one of the preceding claims, **characterized in that** the medium is conducted through and/or past the heat exchanger and/or the electric accumulator as a function of a present temperature of the electric accumulator.

8. Method according to one of the preceding claims, **characterized in that**, for the heating of the electric accumulator, high-frequency current signals are generated in the electric accumulator.

9. Method according to one of the preceding claims, **characterized in that** at least one plate capacitance of the electric accumulator is recharged by means of the high-frequency current signals.

10. Method according to one of the preceding claims, **characterized in that** at least one DC/DC converter is used for generating the high-frequency current signals.

11. Method according to one of the preceding claims, **characterized in that** the high-frequency current signals are generated by means of highly dynamic regulation of the electric machine.

12. Method according to one of the preceding claims, **characterized in that**, in order to set the load-free state of the electric accumulator, accumulator current regulation with a setpoint current value equal to zero or with a high-frequency current setpoint value is used for heating.

13. Method according to one of the preceding claims, **characterized in that**, in order to set the load-free state of the electric accumulator, accumulator power regulation with a power setpoint value equal to zero or with a high-frequency power setpoint value is used for heating.

14. Method according to one of the preceding claims, **characterized in that** warmed cabin interior air or a cabin heater is used for heating.

15. Drive apparatus for a vehicle, in particular motor vehicle, in particular for carrying out the method according to one or more of the preceding claims, which drive apparatus has an internal combustion engine, at least one electric machine and at least one heatable electric accumulator (6), wherein the internal combustion engine can be started by means of the electric machine through the extraction of energy from the electric accumulator (6), and the drive apparatus has means (15) for heating the electric accumulator (6), **characterized in that**, after the starting of the internal combustion engine and until a predetermined minimum temperature of the electric accumulator (6) is reached, the electric accumulator (6) is operated in a load-free or virtually load-free manner, wherein in order to set the load-free state of the electric accumulator (6), accumulator current regulation with a current setpoint value equal to zero is provided.

16. Drive apparatus according to Claim 15, **characterized in that** the means (15) comprise at least one flow duct (12) which supplies a heated liquid and/or gaseous medium to the electric accumulator (6).

17. Drive apparatus according to one of the preceding claims, **characterized in that** the flow duct (12) leads at least in regions through and/or along the outside of the electric accumulator (6).

18. Drive apparatus according to one of the preceding claims, **characterized in that** the means (15) comprise a heat exchanger (9), which is assigned to an exhaust tract (8) of the internal combustion engine, for heating the medium.

19. Drive apparatus according to one of the preceding claims, **characterized by** a bypass (16), which is assigned to the heat exchanger (9) and/or to the electric accumulator (6), for the medium, which bypass can be adjusted as a function of the present accumulator temperature.

20. Drive apparatus according to one of the preceding claims, **characterized in that** the flow duct (12) is formed as an exhaust-gas flow duct.

21. Drive apparatus according to one of the preceding claims, **characterized in that** the means comprise at least one device, in particular a DC/DC converter, for generating high-frequency current signals in the electric accumulator (6).

22. Drive apparatus according to one of the preceding claims, **characterized in that** electric heating elements are arranged, for heating purposes, in the electric accumulator (6) or in the vicinity of the electric accumulator (6).

## Revendications

1. Procédé pour faire fonctionner un dispositif d'entraînement d'un véhicule, notamment d'un véhicule automobile, qui présente un moteur à combustion interne, au moins une machine électrique et au moins un accumulateur électrique chauffant, notamment un accumulateur lithium-ion, de l'énergie étant prélevée de l'accumulateur électrique pour démarrer le moteur à combustion interne au moyen de la machine électrique, **caractérisé en ce qu'**après le démarrage du moteur à combustion interne et jusqu'à avoir atteint une température minimale prédéfinie de l'accumulateur électrique chauffé, l'accumulateur électrique est utilisé hors charge ou quasiment hors charge.

2. Procédé selon la revendication 1, **caractérisé en ce que** de l'énergie thermique provenant de gaz d'échappement du moteur à combustion interne est acheminée à l'accumulateur électrique pour le chauffer.

3. Procédé selon l'une des revendications précédentes, **caractérisé en ce qu'**un fluide liquide et/ou gazeux chauffé est acheminé à l'accumulateur électrique.

4. Procédé selon l'une des revendications précédentes, **caractérisé en ce que** le fluide est guidé à travers l'accumulateur électrique et/ou le long de l'accumulateur électrique.

5. Procédé selon l'une des revendications précédentes, **caractérisé en ce que** le fluide utilisé est un courant d'air, notamment un courant d'air frais qui est exposé à l'énergie thermique soutirée des gaz d'échappement au moyen d'au moins un échangeur de chaleur.

6. Procédé selon l'une des revendications précédentes, **caractérisé en ce que** les gaz d'échappement sont utilisés en tant que fluide.

7. Procédé selon l'une des revendications précédentes, **caractérisé en ce que** le fluide est guidé à travers l'échangeur de chaleur et/ou à travers l'accumulateur électrique et/ou contre celui-ci en fonction d'une température actuelle de l'accumulateur électrique.

8. Procédé selon l'une des revendications précédentes, **caractérisé en ce que** des signaux de courant à haute fréquence sont générés dans l'accumulateur électrique pour chauffer l'accumulateur électrique.

9. Procédé selon l'une des revendications précédentes, **caractérisé en ce que** la capacité d'au moins une plaque de l'accumulateur électrique est rechargée au moyen des signaux de courant à haute fréquence.

10. Procédé selon l'une des revendications précédentes, **caractérisé en ce qu'**au moins un convertisseur CC/CC est utilisé pour générer les signaux de courant à haute fréquence.

11. Procédé selon l'une des revendications précédentes, **caractérisé en ce que** les signaux de courant à haute fréquence sont générés par une régulation dynamique élevée de la machine électrique.

12. Procédé selon l'une des revendications précédentes, **caractérisé en ce qu'**une régulation du courant d'accumulateur ayant une valeur de consigne de courant égale à zéro ou ayant une valeur de consigne de courant à haute fréquence destinée au chauffage est utilisée pour régler l'absence de charge de l'accumulateur électrique.

13. Procédé selon l'une des revendications précédentes, **caractérisé en ce qu'**une régulation de la puissance d'accumulateur ayant une valeur de consigne de puissance égale à zéro ou ayant une valeur de consigne de puissance à haute fréquence destinée au chauffage est utilisée pour régler l'absence de charge de l'accumulateur électrique.

14. Procédé selon l'une des revendications précédentes, **caractérisé en ce que** de l'air de l'espace intérieur de l'habitacle ou un chauffage d'habitacle est utilisé pour le chauffage.

15. Dispositif d'entraînement pour un véhicule, notamment un véhicule automobile, notamment pour mettre en oeuvre le procédé selon une ou plusieurs des revendications précédentes, qui présente un moteur à combustion interne, au moins une machine électrique et au moins un accumulateur électrique chauffant (6), le moteur à combustion interne pouvant être démarré au moyen de la machine électrique en prélevant de l'énergie de l'accumulateur électrique (6) et le dispositif d'entraînement présentant des moyens (15) pour chauffer l'accumulateur électrique (6), **caractérisé en ce que** l'accumulateur électrique (6), après le démarrage du moteur à combustion interne et jusqu'à avoir atteint une température minimale de l'accumulateur électrique (6), est utilisé hors charge ou quasiment hors charge, une régulation du courant d'accumulateur ayant une valeur de consigne de courant égale à zéro étant prévue pour régler l'absence de charge de l'accumulateur électrique (6).

16. Dispositif d'entraînement selon la revendication 15, **caractérisé en ce que** les moyens (15) comprennent au moins un canal d'écoulement (12) qui achemine un fluide liquide et/ou gazeux chauffé à l'accumulateur électrique (6).

17. Dispositif d'entraînement selon l'une des revendications précédentes, **caractérisé en ce que** le canal d'écoulement (12) passe au moins partiellement à travers l'accumulateur électrique (6) et/ou le long de celui-ci.

18. Dispositif d'entraînement selon l'une des revendications précédentes, **caractérisé en ce que** les moyens (15) comprennent un échangeur de chaleur (9) associé au tronçon des gaz d'échappement (8) du moteur à combustion interne en vue de chauffer le fluide.

19. Dispositif d'entraînement selon l'une des revendications précédentes, **caractérisé par** un bipasse (16) pour le fluide associé à l'échangeur de chaleur (9) et/ou à l'accumulateur électrique (6), lequel est réglable en fonction de la température actuelle de l'accumulateur.

20. Dispositif d'entraînement selon l'une des revendications précédentes, **caractérisé en ce que** le canal d'écoulement (12) est réalisé sous la forme d'un canal d'écoulement des gaz d'échappement.

21. Dispositif d'entraînement selon l'une des revendications précédentes, **caractérisé en ce que** les moyens comprennent au moins un dispositif, notamment un convertisseur CC/CC, pour générer des signaux de courant à haute fréquence dans l'accumulateur électrique (6).

22. Dispositif d'entraînement selon l'une des revendications précédentes, **caractérisé en ce que** des éléments chauffants électriques sont disposés dans l'accumulateur électrique (6) ou à proximité de l'accumulateur électrique (6) en vue de le chauffer.
